(19) Europäisches Patentamt
European Patent Office
Office européen des brevets

(11) EP 2 793 020 A1

(12) EUROPEAN PATENT APPLICATION

(43) Date of publication:
22.10.2014 Bulletin 2014/43

(51) Int Cl.:
*G01N 30/86* (2006.01)     *G01N 30/30* (2006.01)

(21) Application number: 14001358.2

(22) Date of filing: 14.04.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 15.04.2013 JP 2013085302

(71) Applicant: Horiba Stec, Co., Ltd.
Kyoto-shi, Kyoto 601-8116 (JP)

(72) Inventors:
• Kono, Nanako
Kyoto-shi Kyoto, 601-8116 (JP)
• Sasaki, Tomohiro
Kyoto-shi Kyoto, 601-8116 (JP)

(74) Representative: Müller-Boré & Partner
Patentanwälte PartG mbB
Friedenheimer Brücke 21
80639 München (DE)

(54) **Data processing device for gas chromatograph, data processing method, and data processing program**

(57)     A data processing device for gas chromatograph includes an actually measured retention time storage part, a predicted retention time storage part, and an actual temperature condition estimation part configured to estimate an actual temperature condition in the column on the basis of an actually measured retention time and a predicted retention time.

FIG.1

**Description**

Technical Field

The present invention relates to a data processing device, a data processing method and a data processing program that are intended to process data acquired by gas chromatographic analysis, and for example, are used for data processing for predicting retention time at the time of temperature rising analysis on the basis of known data on a certain compound, which is acquired by isothermal analysis.

Background Art

When a compound is qualified, for example, retention time of the target compound is measured by the gas chromatographic analysis, the measured retention time is converted into adjustment retention time or a retention index, and a database is searched for compounds having similar adjustment retention times or retention indexes to narrow down potential compounds.

However, the adjustment retention time and the retention index vary depending on temperature conditions at the time when the retention time is measured. More specifically, the adjustment retention time and the retention index vary depending on whether the retention time is measured by the isothermal analysis or the temperature rising analysis, and what temperature rising rate is set in the temperature rising analysis.

For this reason, in the case where an actually measured value and a known value in the database about a certain compound cannot be compared with each other by the gas chromatographic analysis due to varying temperature conditions, the adjustment retention time and the retention index in the actual temperature condition are predicted on the basis of the known adjustment retention time and retention index registered in the database (refer to Patent Literature 1).

There will be described a method of predicting the retention time to be measured by the temperature rising analysis at a predetermined temperature rising rate on the basis of the retention time measured by the isothermal analysis, which is registered in the database.

It is known that the relationship as represented by Expression 1 holds for the adjustment retention time measured on a certain compound by the isothermal analysis and the temperature of a column at the time of the isothermal analysis.

[Expression 1]

$$log_{10}t'_R = -a \times \frac{1}{T} + b \qquad (1)$$

Where, $t_R'$ represents the adjustment retention time and T represents the column temperature at the time of the isothermal analysis. That is, there is a linear relationship between a logarithm of the adjustment retention time at the time of the isothermal analysis and a reciprocal of the column temperature at the time of the isothermal analysis. Coefficients a and b can be determined by acquiring two adjustment retention times of the compound at different temperatures at the time of the isothermal analysis, which are registered in the database, and substituting the values into Expression 1 to solve the simultaneous equation. The retention time $t_R$ at any temperature T at the time of the isothermal analysis can be also found according to the Expression 1.

Following Expressions 2 to 4 are known as general expressions for predicting the retention time in the temperature rising analysis on the basis of the retention time in the isothermal analysis.

[Expression 2]

$$L = \int_0^{tr} v(T)dt \qquad (2)$$

[Expression 3]

$$v = L/t_R \qquad (3)$$

[Expression 4]

$$T = rt + T_i \qquad (4)$$

Where, L represents column length, $v(T)$ represents compound moving rate in the column at temperature T, r represents setting temperature rising rate, t represents time, $T_i$ represents initial temperature, $t_R$ represents retention time in the isothermal analysis, and $t_r$ represents predicted retention time in the temperature rising analysis.

Here, although the column length L is an unknown value, L is present in both the left-hand side and the right-hand side in the state where Expression 3 is substituted into Expression 2 and thus, can be deleted, resulting in that Expression 5 is solved.

[Expression 5]

$$1 = \int_0^{tr} \frac{1}{t_{R(T)}} dt \qquad (5)$$

That is, the time $t_r$ at the time when a definite integral of the right-hand side in Expression 5 becomes 1 is the retention time in the temperature rising analysis. The definite integral can be calculated by a sectional quadrature method of dividing integral interval into many sectors every short time period $\Delta t$ as represented by Expression 6 by using a function between the retention time $t_R$ and the temperature T according to Expression 1 and a function between the temperature T and the time t according to Expression 4.

[Expression 6]

$$1 = \frac{\Delta t}{t_R(T_1)} + \frac{\Delta t}{t_R(T_2)} + \frac{\Delta t}{t_R(T_3)} + \cdots \qquad (6)$$

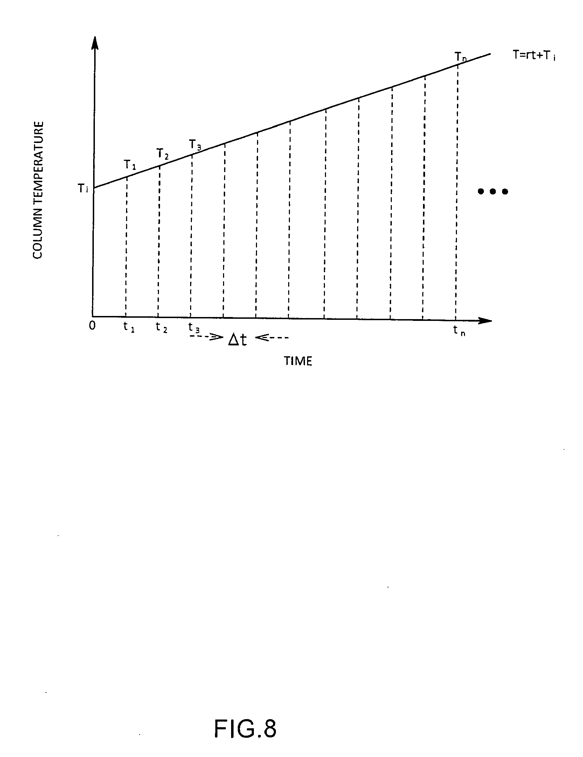

More specifically, as shown in Fig. 8, the column temperature $T_n$ at the time $t_n$ divided every short time period $\Delta t$ may be calculated by Expression 4, the retention time $t_R (T_n)$ in the isothermal analysis at each time $t_n$ may be calculated by Expression 1, and the sum may be sequentially calculated from a temperature rising start time. Then, n is incremented, and the time $t_n$ at the time when the sum becomes 1 is the predicted retention time $t_R$ in the temperature rising analysis.

However, the predicted retention time in the temperature rising analysis, which is predicted based on known data in the isothermal analysis by using the above-mentioned method may largely deviated from the actually measured retention time actually measured when an oven is set such that the column temperature achieves the same temperature rising rate as the temperature rising rate used for prediction to perform the gas chromatographic analysis.

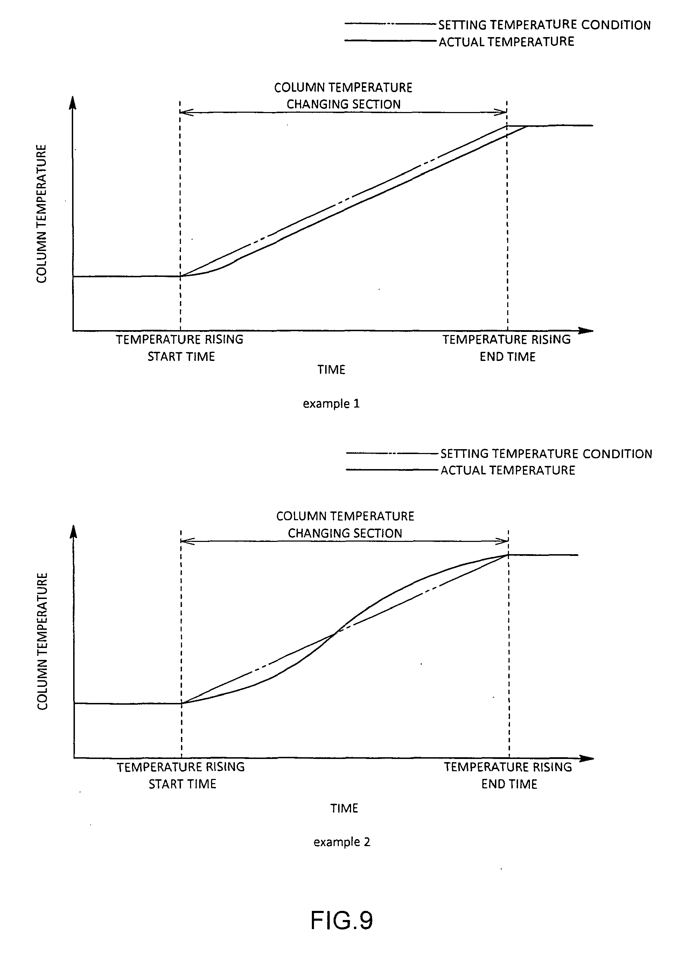

The Inventor earnestly examined this phenomenon, and found that the phenomenon occurred because the setting temperature rising rate set to the oven is deviated from the actual temperature rising rate that is the actual temperature rising rate in the column as represented in each graph in Fig. 9.

That is, since the setting temperature rising rate set to the oven is only a target value, and the temperature in the column cannot be directly measured, the actual temperature rising rate in the column is likely to be late as shown in Fig. 9. For this reason, the temperature $T_n$ at a certain time $t_n$, which is calculated by an ideal expression such as Expression 4, is deviated from the actual temperature in the column at the time $t_n$, resulting in that the calculated retention time $t_R (T_n)$ at the time $t_n$ in the isothermal analysis is also different from an actual value. As a result, since the sum in Expression 6 is an incorrect value that is different from the actual value, the predicted retention time $t_R$ at the time of the temperature rising analysis has a large error with respect to the actually measured retention time.

Although deviation of the setting temperature rising rate from the actual temperature rising rate is assumed, since the temperature in the column cannot be actually measured, it is difficult to quantitatively assess the deviation by direct measurement. In addition, since the oven used for the gas chromatographic analysis varies, a deviation amount of the setting temperature rising rate from the actual temperature rising rate can differ according to a gas chromatograph that measures the retention time. Thus, it is difficult to formulate or generalize the deviation amount of the setting temperature rising rate from the actual temperature rising rate, and a method of quantitatively assess a temperature rising characteristic of each chromatograph has not been known yet.

Also in the isothermal analysis in addition to the above-mentioned temperature rising analysis, an error between the actually measured retention time and the predicted retention time calculated by Expression 1 and so on can occur. This is probably due to an error between a setting sustained temperature set to the oven and an actual sustained temperature in the column.

That is, due to the error between setting temperature conditions set to the oven such as the setting temperature rising rate and the setting sustained temperature, and actual temperature conditions such as the actual temperature rising rate and the actual sustained temperature in the column, the calculated predicted retention time may be largely deviated from the actually measured retention time.

In consideration of these matters, to further improve the accuracy of qualitative gas chromatographic analysis including the temperature rising analysis as well as the isothermal analysis, it is need to quantitatively assess the difference between the setting temperature condition set to the oven and the actual temperature condition in the column, which has not conventionally considered, or to use a similar condition to the actual temperature condition when the predicted retention time is calculated, thereby calculating the predicted retention time more accurately.

Citation List

Patent Literature

Patent Literature 1: International Publication No. WO2012/118209

Summary of Invention

Technical Problem

The present invention is devised in consideration of the above-mentioned problem, and its object is to provide a data processing device for gas chromatograph, a data processing method, and a data processing program that can estimate the deviation amount of the setting temperature condition from the actual temperature condition in the column, which has not conventionally considered, and improve the accuracy of predicting the predicted retention time and retention index from known data by the isothermal analysis on the basis of the estimated deviation amount. Solution to Problem

That is, a data processing device for gas chromatograph according to the present invention includes an actually measured retention time storage part configured to store an actually measured retention time actually measured on a compound by isothermal analysis or temperature rising analysis in the state where a predetermined setting temperature condition is set to an oven, a predicted retention time storage part configured to store a predicted retention time calculated based on known data by the isothermal analysis on the compound and an assumed temperature condition assumed on a temperature condition in a column, and an actual temperature condition estimation part configured to estimate an actual temperature condition in the column on the basis of the actually measured retention time and the predicted retention time.

Here, the temperature condition conceptually contains sustained temperature in the isothermal analysis, the temperature rising rate in the temperature rising analysis, and an initial setting temperature. The retention time conceptually contains an adjustment retention time acquired by subtracting a void time from the retention time.

As such, since the actual temperature condition estimation part is configured to estimate the actual temperature condition in the column on the basis of the actually measured retention time and the predicted retention time, the actual temperature rising condition can be estimated without measuring the actual temperature condition in the column, which is difficult to be measure. Further, the predicted retention time can be calculated based on the estimated actual temperature rising condition more accurately, improving the estimation accuracy of the quality of an unknown sample.

To accurately estimate the temperature rising rate, which is especially difficult to be estimated by the gas chromatographic analysis, the actually measured retention time storage part may be configured to store the actually measured retention time actually measured on the compound by the temperature rising analysis in the state where a predetermined setting temperature rising rate that is the setting temperature condition is set to the oven, the predicted retention time storage part may be configured to store the predicted retention time calculated based on known data by the isothermal analysis on the compound, and an assumed temperature rising rate that is assumed as the assumed temperature condition and includes a rate correction value, and the actual temperature condition estimation part may be configured to estimate an actual temperature rising rate as the actual temperature condition in the column on the basis of the actually measured retention time and the predicted retention time.

Here, in "the assumed temperature rising rate acquired by adding the rate correction value to the setting temperature rising rate", the rate correction value may be 0, and the assumed temperature rising rate may be the same as the setting temperature rising rate.

As such, since the actual temperature condition estimation part is configured to estimate the actual temperature rising rate that is the actual temperature rising rate in the column on the basis of the actually measured retention time and the predicted retention time, the actual temperature rising rate can be found without directly measuring the temperature in the column.

Next, a reason why the actual temperature rising rate in the column can be estimated according to the present invention will be qualitatively described.

It is likely that the actually measured retention time does not indicate a value measured when the temperature is raised at the setting temperature rising rate, but indicate a value measured when the temperature is raised at the actual temperature rising rate that is the actual temperature rising rate in the column. Thus, in the case where the value of the actually measured retention time matches or is close to the value of the predicted retention time, it is likely that the assumed temperature rising rate used to calculate the predicted retention time substantially matches the actual temperature rising rate.

Accordingly, for example, when an error between the actually measured retention time and the predicted retention time is assessed, and the error is smaller than a predetermined value, the assumed temperature rising rate used to calculate the predicted retention time can be estimated to be the actual temperature rising rate. Alternatively, for example, the rate correction values may be assigned in a predetermined range to calculate a plurality of predicted retention times, and the assumed temperature rising rate used to calculate the predicted retention time closest to the actually measured retention time can be estimated to be the actual temperature rising rate.

As described above, the actual temperature condition estimation part can estimate the actual temperature rising rate on the basis of the actually measured retention time and the predicted retention time.

To further improve the prediction accuracy of the calculated retention time in the temperature rising analysis by using the estimated actual temperature rising rate, a post-correction predicted retention time calculation part configured to calculate a post-correction predicted retention time on the basis of the actual temperature rising rate estimated by the actual temperature condition estimation part and the known data by the isothermal analysis may be further provided.

Even in the case where it is difficult to predict the value of the assumed temperature rising rate and therefore, the rate correction value that achieves a value close to the actual temperature rising rate cannot be set and only a random rate correction value can be set, to accurately estimate the actual temperature rising rate on the basis of the actually measured retention time and the predicted retention time, the predicted retention time storage part may be configured to store a plurality of predicted retention times calculated based on a plurality of rate correction values on the compound, and the actual temperature condition estimation part may be configured to include a relational expression identification part configured to identify a rate correction value-error relational expression that is a relational expression between the rate correction value and a retention time error on the basis of a plurality of combinations of the rate correction value and the retention time error that is an error between the actually measured retention time and the predicted retention time, a proper rate correction value calculation part configured to calculate a proper rate correction value that is the rate correction value at the time when the retention time error becomes a predetermined value on the basis of the rate correction value-error relational expression identified by the relational expression identification part, and an actual temperature rising rate calculation part configured to calculate the actual temperature rising rate on the basis of the proper rate correction value calculated by the proper rate correction value calculation part and the setting temperature rising rate.

As such, for example, the rate correction value-error relational expression indicating the relationship between the rate correction value and the retention time error that is the error between the actually measured retention time and the predicted retention time may be created from two predicted retention times calculated at the assumed temperature rising rates using two randomly-selected different rate correction values, and the proper rate correction value that is the rate correction value at which the error between the predicted retention time and the actually measured retention time is less than a predetermined error can be calculated by the rate correction value-error relational expression. Further, since the actually measured retention time substantially matches the predicted retention time, the temperature rising rate calculated by applying the proper rate correction value to the setting temperature rising rate becomes substantially same as the actual temperature rising rate.

Both in the case where the actual temperature rising rate is offset from the setting temperature rising rate in the time-axis direction, and where the error between the setting temperature rising rate and the actual temperature rising rate varies with time elapsed from start of temperature rising, to accurately estimate the actual temperature rising rate, the actually measured retention time storage part may be configured to store the actually measured retention time of each of the plurality of compounds, the predicted retention time storage part may be configured to store the plurality of predicted retention times calculated based on the assumed temperature rising rates of different rate correction values on each of the plurality of compounds, and the actual temperature condition estimation part may be configured to divide a column temperature rising section in which at least a column temperature is raised into a plurality of divided sections every predicted retention time calculated using the actually measured retention time or the setting temperature rising rate of each compound, and estimate the actual temperature rising rate in each divided section.

To estimate the actual temperature rising rate on the basis of the actually measured retention time and the predicted retention time on the compound, which reflect the temperature rising rate in each divided section the best to further improve the estimation accuracy, the relational expression identification part may be configured to identify the rate correction value-error relational expression of each compound on which the actually measured retention time is actually measured, the proper rate correction value calculation part may be configured to calculate the proper rate correction value on the basis of the rate correction value-error relational expression of each compound, and the actual temperature rising rate calculation part may be configured to calculate an intermediate corrected temperature rising rate that is a temperature rising rate acquired by adding a minimum error correction value calculated by the rate correction value-error relational expression of the compound corresponding to the actually measured retention time or the predicted retention time indicating an end of each divided section, to the setting temperature rising rate for each divided section, and calculate the actual temperature rising rate on the basis of the intermediate corrected temperature rising rate.

To evenly perform fitting of the actual temperature rising rate estimated for each divided section in almost all divided sections, not only in some divided sections to decrease the retention time error that is the error between the actually measured retention time and the predicted retention time, the actual temperature rising rate calculation part may be configured to calculate a final corrected temperature rising rate that is the temperature rising rate acquired by adding a rate recorrection value to the intermediate corrected temperature rising rate calculated for each divided section, and output the final corrected temperature rising rate at which an error between the predicted retention time of each compound, which is calculated using the final corrected temperature rising rate, and the actually measured retention time becomes minimum, as the actual temperature rising rate.

To accurately estimate the temperature condition in the column on the basis of an actual measurement result of the retention time of one or a plurality of compounds without directly measuring the temperature in the column, a data processing method for gas chromatograph including a retention time actually measuring step of actually measuring an actually measured retention time on a compound by isothermal analysis or temperature rising analysis in the state where a predetermined setting temperature condition is set to an oven, a retention time predicting step of calculating a predicted retention time on the basis of known data by the isothermal analysis on the compound and an assumed temperature condition assumed on a temperature condition in a column, and an actual temperature condition estimating step of estimating an actual temperature condition in the column on the basis of the actually measured retention time and the predicted retention time may be used.

To add a feature for estimating the actual temperature condition to the existing data processing device for gas chromatograph to improve the prediction accuracy of the predicted retention time and enable more accurate qualification of the compound, a data processing program for gas chromatograph including an actually measured retention time storage part configured to store an actually measured retention time actually measured on a compound by isothermal analysis or temperature rising analysis in the state where a predetermined setting temperature condition is set to an oven, a predicted retention time storage part configured to store a predicted retention time calculated based on known data by the isothermal analysis on the compound and an assumed temperature condition assumed on a temperature condition in a column, and an actual temperature condition estimation part configured to estimate an actual temperature condition in the column on the basis of the actually measured retention time and the predicted retention time, or a recording medium that records the data processing program for gas chromatograph may be used. Advantageous Effects of Invention

As described above, the data processing device for gas chromatograph, the data processing method, and the data processing program according to the present invention can indirectly estimate the actual temperature condition such as the actual temperature rising rate on the basis of the actually measured retention time and the predicted retention time predicted from known data without directly measuring the temperature in the column. Moreover, since the retention time error between the actually measured retention time and the predicted retention time reflects a difference between the assumed temperature condition including the setting temperature condition and the correction condition and the actual temperature condition, the actual temperature condition can be estimated based on the actually measured retention time and the predicted retention time.

Brief Description of Drawings

[Fig. 1]

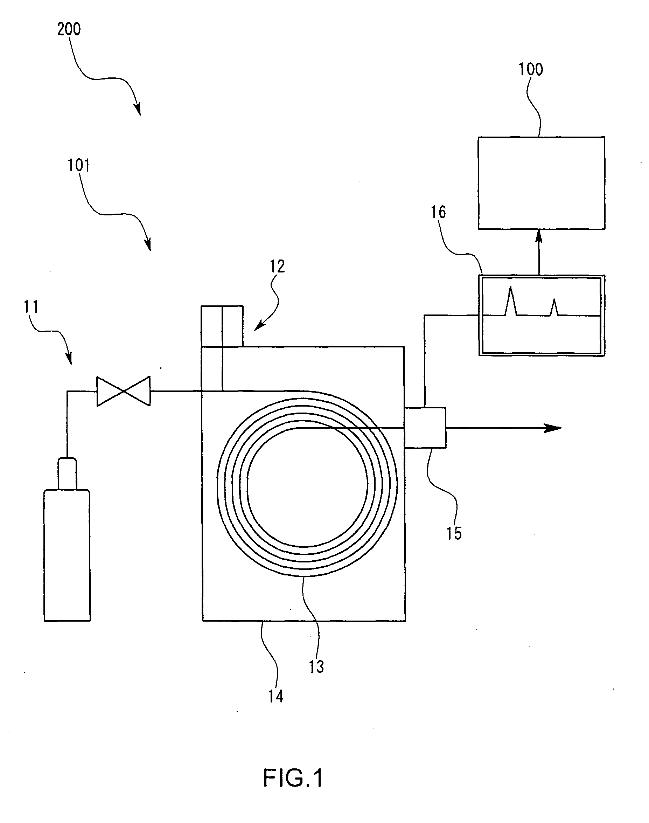

Fig. 1 is a schematic view showing an analysis system using a gas chromatograph data processing device in accordance with an embodiment of the present invention.
[Fig. 2]

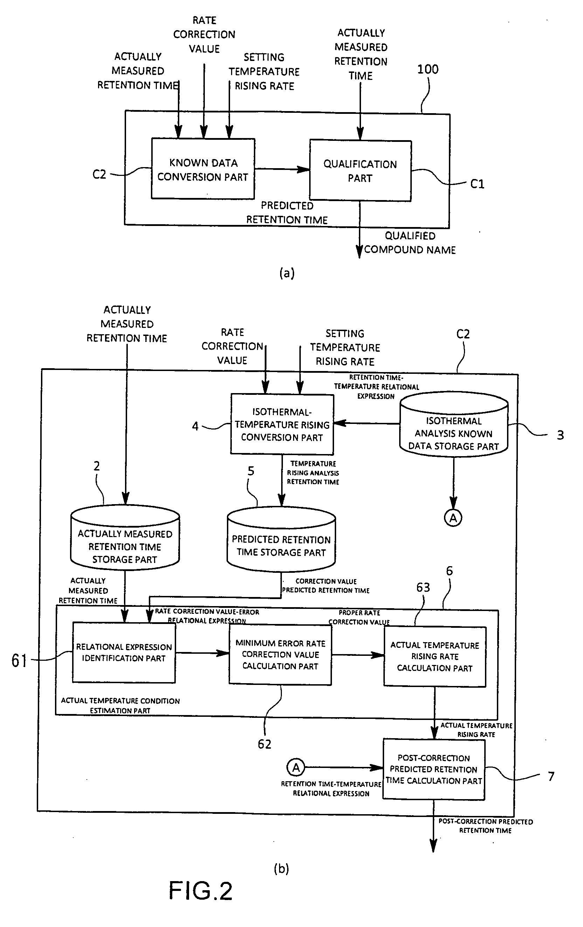

Fig. 2 is a functional block diagram showing functions of the gas chromatograph data processing device in accordance with the embodiment.
[Fig. 3]

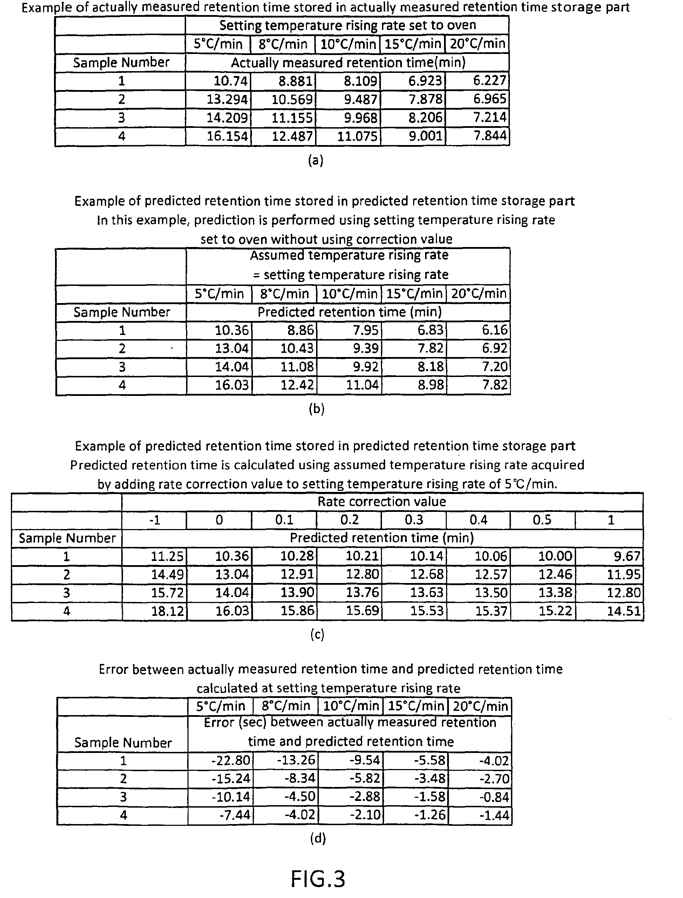

Fig. 3 shows examples of data stored in an actually measured retention time storage part and a predicted retention time storage part in the embodiment.
[Fig. 4]

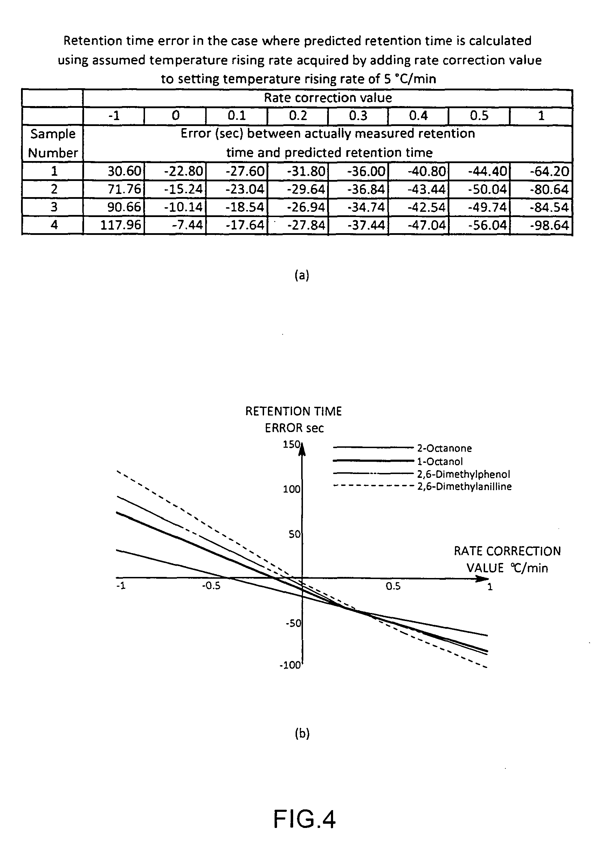

Fig. 4 shows an example of data constituting a rate correction value-error relational expression identified by a relational expression identification part in the embodiment, and its graph.
[Fig. 5]

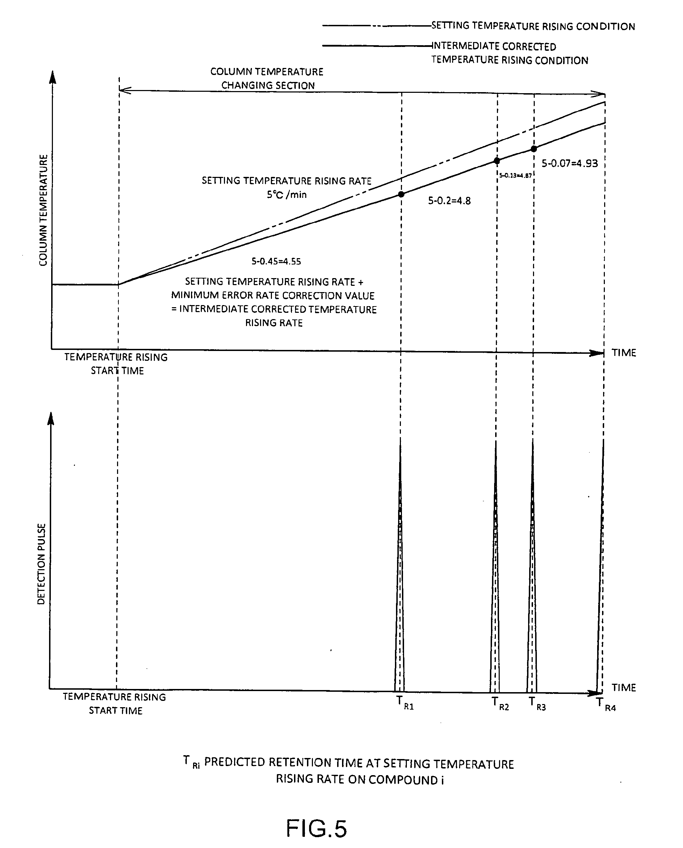

Fig. 5 shows graphs representing a concept of an intermediate corrected temperature rising rate outputted from an actual temperature condition estimation part in the embodiment.
[Fig. 6]

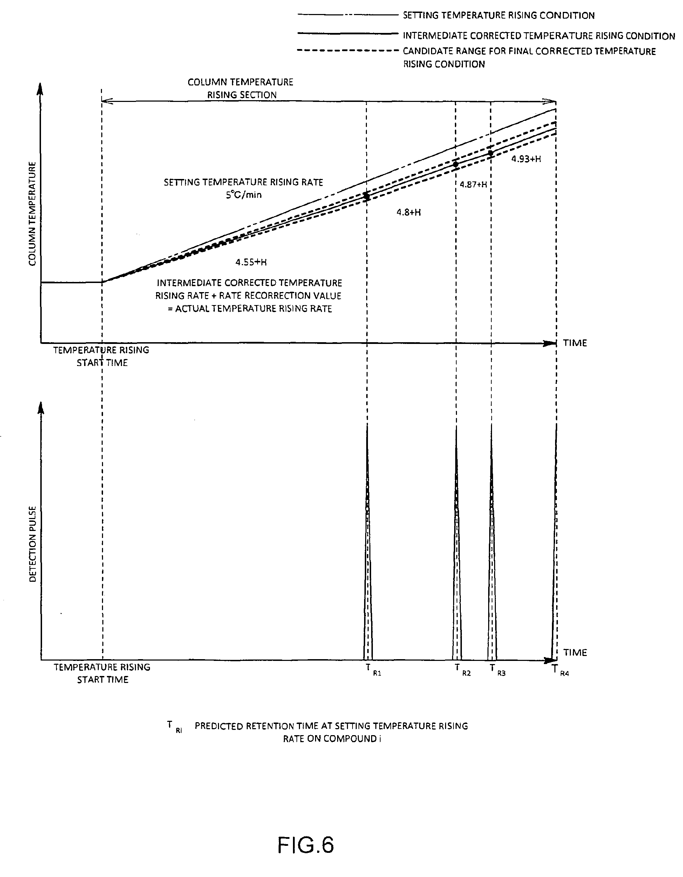

Fig. 6 shows graphs representing a concept of a final corrected temperature rising rate outputted from actual temperature condition estimation part in the embodiment.
[Fig. 7]

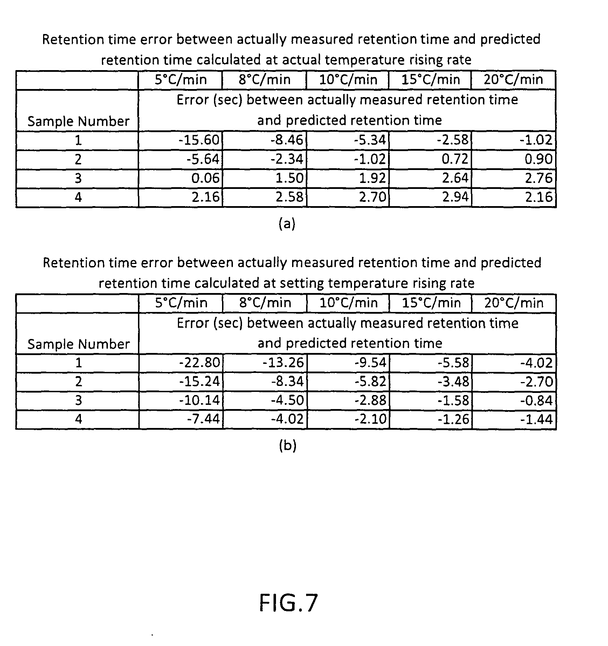

Fig. 7 shows experiment data indicating the effect of reducing an error between a predicted retention time and an actually measured retention time by using an actual temperature rising rate estimated by the actual temperature condition estimation part in the embodiment.
[Fig. 8]
Fig. 8 is a schematic view showing a method of calculating the predicted retention time in the temperature rising analysis from data in the isothermal analysis.
[Fig. 9]
Fig. 9 is an image view showing deviation of a setting temperature rising rate from an actual temperature rising rate.

Reference Signs List

200 Analysis system
100 Gas chromatograph
101 Data processing device for gas chromatograph
2 Actually measured retention time storage part
3 Isothermal analysis known data storage part
4 Isothermal-temperature rising conversion part
5 Predicted retention time storage part
6 Actual temperature condition estimation part
61 Relational expression identification part
62 Proper rate correction value calculation part
63 Actual temperature rising rate calculation part
7 Post-correction predicted retention time calculation part

Description of Embodiments

An embodiment of the present invention will be described with reference to figures.
As shown in Fig. 1, a data processing device for gas chromatograph 100 in the present embodiment is combined with a gas chromatograph 101 to constitute an analysis system 200.
As shown in Fig. 1, the gas chromatograph 101 includes a column 13 that is a tube coated with a stationary phase inside, a carrier gas introduction part 11 for introducing carrier gas, which is used as a mobile phase, into the column 13, a sample introduction part 12 for introducing a compound desired to be qualified into the column 13, an oven 14 for keeping the temperature of the column 13 or raising the temperature at a constant temperature rising rate, a sensing part 15, that, on an outlet side of the column 13, senses a passing substance to output an electrical signal, and a retention time measuring part 16 that, on the basis of the electrical signal outputted from the sensing part 15, measures a retention time that is a time required for each sample to reach an outlet of the column 13 from the introduction of the sample.
The user can set various temperature conditions including temperature rising analysis conditions and isothermal analysis conditions to the oven 14, at least initial oven temperature, setting temperature rising rate, temperature rising start time, and temperature rising end time can be set as the temperature conditions in the temperature rising analysis, and setting sustained temperature can be set as the temperature condition in the isothermal analysis. A temperature sensor (not shown) is provided in the oven 14 to perform temperature feedback control so as to minimize a difference between a target temperature at each time determined depending on the set initial oven temperature and setting temperature rising rate, and a measurement temperature measured by the temperature sensor. That is, such feedback control generates a slight error, such as a delay, between the setting temperature rising rate that is a target value set by the user and the actual temperature rising rate that is the actual temperature rising rate in the column 13.
The data processing device for gas chromatograph 100 is used to compare an adjustment retention time and a retention index on a compound, which are acquired by the gas chromatographic analysis, with the adjustment retention time and the retention index on the compound, which are recorded in the database or calculated based on known data to qualify the compound.

The data processing device for gas chromatograph 100 is configured such that, in the case where the gas chromatograph 101 performs the temperature rising analysis, by reflecting a temperature change occurring in the column 13 substantially as it is, a predicted retention time that is the retention time in the temperature rising analysis can be calculated from the known retention time in the isothermal analysis. In other words, the data processing device for gas chromatograph 100 is configured such that, to set the error between the predicted retention time and the actually measured retention time actually measured by the gas chromatograph 101 to a predetermined value or smaller, as needed, the temperature rising rate used to calculate the predicted retention time is corrected to a temperature rising rate other than the setting temperature rising rate set to the oven 14, to calculate the predicted retention time.

More specifically, the data processing device for gas chromatograph 100 is constituted of a so-called computer provided with a CPU, a memory, A/D, D/A converters, an input/output device, and a monitor, and is configured to, in such a manner that the components work together and execute the data processing program for gas chromatograph stored in the memory, fulfill functions of the components as shown in a functional block diagram in Fig. 2.

That is, as shown in Fig. 2(a), the data processing device for gas chromatograph 100 is configured of a qualification part C1 for comparing an actually measured retention index with a predicted retention index predicted based on known data to qualify an unknown sample, and a known data conversion part C2 for calculating the predicted retention index and the predicted retention time to be compared with actually measured values by the qualification part C1, on the basis of known data.

Here, the retention index in the isothermal analysis is, as represented by Expression 7, a value calculated from a logarithm of the adjustment retention time of an unknown sample or compound and a logarithm of the adjustment retention time of a standard substance such as alkane. The retention index in the temperature rising analysis is, as represented by Expression 7', a value calculated from the adjustment retention time of an unknown sample or a compound and the adjustment retention time of the standard substance such as alkane.

[Expression 7]

$$I(X) = \frac{\log t'(X) - \log t'(P_z)}{\log t'(P_{z+1}) - \log t'(P_z)} \times 100 + 100 \times Z \qquad (7)$$

$$I(X) = \frac{t'(X) - t'(P_z)}{t'(P_{z+1}) - t'(P_z)} \times 100 + 100 \times Z \qquad (7')$$

Where, I represents retention index, t'(X) represents adjustment retention time of unknown sample or compound, t'(Pz) represents adjustment retention time of alkane with carbon number Z, t'($P_{z+1}$) represents adjustment retention time of alkane with carbon number Z + 1, and Z represents carbon number of alkane.

When the temperature condition such as the temperature of the oven 14 in the gas chromatographic analysis varies, even the same compound has different retention indexes. However, the retention index can be theoretically prevented from being affected by a variation of the gas chromatograph 101 in the length of the column 13, the linear speed of carrier gas, and so on. Thus, the qualification part C1 can calculate the predicted retention index that reflects the same temperature condition as the temperature condition under which the retention index is actually measured, and compare the predicted retention index with the actually measured retention index.

That is, the qualification part C1 is configured such that, to compare the actually measured retention index with the predicted retention index, such that a value can be calculated from each of the actually measured retention time and the predicted retention time. The actually measured retention index is calculated from the retention time actually measured in the isothermal analysis or the temperature rising analysis on an unknown sample by the gas chromatograph 101, and the retention time of the standard substance. The predicted retention index is calculated the retention time of each compound converted from known data by the known data conversion part C2 so as to meet the temperature condition such as the isothermal analysis condition or the temperature rising analysis of the actually measured retention index, and the retention time of the standard substance. Then, the qualification part C1 compares the calculated actually measured retention index with the calculated predicted retention index, and when a compound having the predicted retention index matching the actually measured retention index is present, the qualification part C1 determines that the unknown sample corresponds to the matched compound, and outputs a name of the compound.

As shown in Fig. 2(b), the known data conversion part C2 fulfills at least functions of an actually measured retention time storage part 2, an isothermal analysis known data storage part 3, an isothermal-temperature rising conversion part 4, a predicted retention time storage part 5, an actual temperature condition estimation part 6, a post-correction predicted retention time calculation part 7.

Each of the parts will be described below.

The actually measured retention time storage part 2 serves to store the actually measured retention time that is the retention time actually measured when the gas chromatograph 101 performs the temperature rising analysis by using the setting temperature rising rate as the setting temperature condition on each of a plurality of compounds. In the present embodiment, for example, as shown in Fig. 3(a), the actually measured retention time storage part 2 stores the actually measured retention time in the case where various setting temperature rising rates are applied to each of the plurality of compounds. Here, the temperature feedback control of the oven 14 have an error and thus, the temperature in the column 13 does not rise at the setting temperature rising rate. Accordingly, it is deemed that the actually measured retention time is not a value acquired by raising the temperature at the setting temperature rising rate set by the user, but a value acquired by the temperature rising analysis at the actual temperature rising rate other than the setting temperature rising rate.

As shown in Fig. 2 (b), the isothermal analysis known data storage part 3 serves to store the known data such as the adjustment retention time and the retention index on many compounds registered in, for example, NIST. In the present embodiment, a retention time-temperature relational expression representing relationship between the retention time in the isothermal analysis and the temperature at the time of the isothermal analysis on each compound as represented by Expression 8 is stored for each compound.

[Expression 8]

$$t_R = t_0 + 10^{-a \times \frac{1}{T} + b} \qquad (8)$$

Where, $t_R$ represents retention time in isothermal analysis, to represents retention time (void time) of ingredients that are not held in the column 13, such as methane and noble gas, a and b represent coefficients unique to each compound, and T represents temperature. The function in Expression 8 will be hereinafter referred to as a RT enumeration function.

The isothermal-temperature rising conversion part 4 calculates the retention time in the temperature rising analysis from data known by the isothermal analysis. More specifically, the predicted retention time predicted as the retention time under any temperature rising analysis condition is calculated using the setting temperature rising rate, an initial temperature, and a rate correction value, which are set to the oven 14 by the user, by Expressions 8, 9, and 10. In other words, the isothermal-temperature rising conversion part 4 is configured to calculate the predicted retention time under the assumed temperature condition, which includes the setting temperature rising rate as a setting temperature rising condition and the rate correction value as a correction condition, and is assumed on the temperature condition in the column 13, by the Expressions 8, 9, and 10.

[Expression 9]

$$1 = \int_0^{tr} \frac{1}{t_{R(T)}} dt \qquad (9)$$

[Expression 10]

$$T = (r + h)t + T_i \qquad (10)$$

Where, $t_r$ represents predicted retention time in temperature rising analysis, $t_R(T)$ represents retention time in isothermal analysis at temperature T, which is found by Expression 8, r represents setting temperature rising rate, t represents time, $T_i$ represents initial temperature, and h represents rate correction value.

Expression 10 is an expression indicating the temperature in the column 13 at the time of the temperature rising analysis. In the present embodiment, since it is assumed that the setting temperature rising rate set to the oven 14 is deviated from the actual temperature rising rate that is the actual temperature rising rate of the column 13, a value r + h of the assumed temperature rising rate acquired by adding the rate correction value h to the setting temperature rising rate r is used as a candidate for the actual temperature rising rate. As apparent from Expression 10, when the rate correction value is 0, the setting temperature rising rate set to the oven 14 is used as it is. Details of the method of determining the predicted retention time $t_r$ in the temperature rising analysis by Expression 9 are the same as those described in Background Art and thus, description thereof is omitted.

In the case where the RT enumeration function represented in Expression 8 cannot be directly acquired from the isothermal analysis known data storage part 3, the isothermal-temperature rising conversion part 4 calculates two adjustment retention times from two registered retention indexes of different temperatures in the isothermal analysis and then, identifies the RT enumeration function.

More specifically, the isothermal-temperature rising conversion part 4 finds the adjustment retention time by Expression 7 for calculating the retention index, and substitutes two known retention indexes of different temperatures measured on the same compound into Expression 11 and Expression 12 to convert the indexes into two adjustment retention times of different temperatures.

[Expression 11]

$$\log t'_{T1} = \log t'_{T1}(P_z) + (I_{T1} - 100 \times Z)(\log t'_{T1}(P_{z+1}) - \log t'_{T1}(P_z))/100 \quad (11)$$

[Expression 12]

$$\log t'_{T2} = \log t'_{T2}(P_z) + (I_{T2} - 100 \times Z)(\log t'_{T2}(P_{z+1}) - \log t'_{T2}(P_z))/100 \quad (12)$$

Where, $I_{T1}$, $I_{T2}$ represent known retention indexes at temperatures $T_1$, $T_2$ of compound, $t'_{T1}$, $t'_{T2}$ represent adjustment retention times at temperatures $T_1$, $T_2$ of compound, $t'_{T1}(P_Z)$, $t'_{T2}(P_Z)$ represent adjustment retention times at temperatures $T_1$, $T_2$ of alkane having carbon number of Z, $t'_{T1}(P_{Z+1})$, $t'_{T2}(P_{Z+1})$ represent adjustment retention times at known temperatures $T_1$, $T_2$ of alkane having carbon number of Z + 1, and Z represents carbon number. In the case of using a Gauss symbol [ ] to represent the carbon number Z, Z is an integer selected by $Z = [I_{T1}]$ in Expression 11 and $Z = [I_{T2}]$ in Expression 12.

The isothermal-temperature rising conversion part 4 identifies the RT enumeration function from the two retention indexes as represented by Expression 13, by using the linear relationship between the logarithm of the adjustment retention time and the reciprocal of the temperature as represented by Expression 1 described in Background Art.

[Expressions 13]

$$\log t'_R = \frac{\log t'_{T2} - \log t'_{T1}}{1/T_2 - 1/T_1}\left(\frac{1}{T}\right) + \frac{(1/T_2)\log t'_{T1} - (1/T_1)\log t'_{T2}}{1/T_2 - 1/T_1} \quad (13)$$

Where, T represents isothermal analysis temperature, and $t'_R$ represents adjustment retention time at isothermal analysis temperature T of compound.

In this manner, the isothermal-temperature rising conversion part 4 may identify the RT enumeration function for calculating the adjustment retention time in the isothermal analysis at any temperature T from the known retention index, and use the function in place of Expression 8.

The predicted retention time storage part stores the predicted retention time calculated based on known data by the isothermal analysis on the compound, and the assumed temperature condition including the setting temperature condition and the correction condition. More specifically, in the present embodiment, the predicted retention time storage part 5 stores the predicted retention time in the temperature rising analysis, which is converted by the isothermal-temperature rising conversion part 4, on the same compound as the compound subjected to the temperature rising analysis by the gas chromatograph 101. The predicted retention time storage part 5 stores the predicted retention time converted at the assumed temperature rising rate of different rate correction values that is the correction condition on each compound, which is set as the assumed temperature condition, the predicted retention time pairing with the rate correction value. In the present embodiment, the rate correction value is set to be -1 or more and 1 or less such that the assumed temperature rising rate is evenly distributed in a predetermined range centering on the setting temperature rising rate. The condition for the rate correction value is not limited to the above-mentioned example, and may be appropriately set according to a difference among the gas chromatographs 101. Fig. 3(b) shows the predicted retention time calculated using the rate correction value of 0 and the setting temperature rising rate set to the oven 14, as an example of the predicted retention time stored in the predicted retention time storage part 5. Furthermore, as shown in Fig. 3 (c), the predicted retention time storage part 5 also stores the predicted retention time calculated using the assumed temperature rising rate acquired by adding different correction values to the setting temperature rising rate.

As shown in Fig. 3(d), in the case where the setting temperature rising rate is used as it is, a large error in retention occurs between the actually measured retention time and the predicted retention time. Fig. 3(d) shows errors in seconds, each being calculated by subtracting each actually measured retention time in Fig. 3(a) from each predicted retention time in Fig. 3(b) and multiplying the value by 60. Fig. 3(c) demonstrates that a lower-boiling compound has a larger retention time error, and a higher-boiling compound has an error that positively changes and has a smaller absolute value. This suggests that the actual temperature rising rate is deviated from the setting temperature rising rate, and a large delay occurs especially at start-up.

The actual temperature condition estimation part 6 shown in Fig. 2 (b) is configured to estimate the actual temperature rising rate as one actual temperature condition in the column 13 on the basis of the actually measured retention time actually measured at the setting temperature rising rate and the predicted retention time. Here, the actual temperature condition estimation part 6 is configured to estimate the actual temperature rising rate corresponding to each setting temperature rising rate set to the oven 14, and as shown in Fig. 5, to divide a column temperature rising section in which the column temperature is raised every predicted retention time calculated using the setting temperature rising rate on compounds subjected to the temperature rising analysis at the same time to form a plurality of divided sections, and estimate the actual temperature rising rate in each of the divided sections. In the present embodiment, since the actually measured retention times on four compounds are obtained, the four divided sections are formed as shown in Fig. 5. The divided sections may be formed based on the actually measured retention time actually measured on each compound. Further, in the present embodiment, although only the column temperature rising section is divided, a section also including a section in which the constant temperature is kept in the temperature rising analysis may be divided.

For the above-mentioned estimation of the temperature rising rate, the actual temperature condition estimation part 6 is configured of, as shown in Fig. 2(b), a relational expression identification part 61, a proper rate correction value calculation part 62, and an actual temperature rising rate calculation part 63. A method of estimating the actual temperature rising rate will be described while describing the configuration and operation of each of the parts.

The relational expression identification part 61 serves to identify a rate correction value-error relational expression that is a relational expression between the rate correction value and a retention time error on the basis of a plurality of combinations of the rate correction value and the retention time error that is an error between the actually measured retention time and the predicted retention time. In the present embodiment, the relational expression identification part 61 is configured of identify the rate correction value-error relational expression on each compound, the actually measured retention time of which is acquired. Here, using the setting temperature rising rate set to 5 °C/min as a specific example, Fig. 4(a) shows the retention time error that is the error between the predicted retention time calculated using the assumed temperature rising rate shown in Fig. 3 (c) and the actually measured retention time. Fig. 4(b) is a graph indicating the relationship between the rate correction value and the retention time error.

As apparent from Fig. 4, there is one-to-one correspondence relationship between the rate correction value and the retention time error, and the plurality of combinations of the rate correction value and the retention time error enables identification of an approximate straight line or an approximate curved line as the rate correction value-error relational expression. Further, as apparent from the graph, since each straight line cross the horizontal axis, the rate correction value at which the retention time error becomes 0 exists in each compound.

When the rate correction value-error relational expression is identified on each compound, the proper rate correction value calculation part 62 shown in Fig. 2(b) calculates a proper rate correction value that is the rate correction value at which the retention time error becomes 0 as the predetermined value on each compound on the basis of the rate correction value-error relational expression identified by the relational expression identification part 61. That is, the proper rate correction value calculation part 62 is configured to acquire the rate correction value at the time when each straight line crosses the horizontal axis in Fig. 4(b), as the proper rate correction value. In the present embodiment, the proper rate correction values corresponding to the first to fourth divided sections, which are calculated by the proper rate correction value calculation part 62, are -0.45, -0.2, -0.13, and -0.07, respectively, as shown in the graph of Fig. 4(b). The predetermined value may be any value other than 0. For example, the predetermined value may be any value that is allowable as the retention time error between the actually measured retention time and the predicted retention time.

Next, as shown in Fig. 5, the actual temperature rising rate calculation part 63 is configured to calculate the actual temperature rising rate for each divided section on the basis of the proper rate correction value calculated by the proper rate correction value calculation part 62 and the setting temperature rising rate.

More specifically, the actual temperature rising rate calculation part 63 is configured to first calculate an intermediate corrected temperature rising rate that is the temperature rising rate acquired by adding the minimum error correction value calculated by the rate correction value-error relational expression on the compound corresponding to the predicted retention time indicating the end of each divided section, to the setting temperature rising rate. That is, in the specific example shown in Fig. 5, in the first divided section from the start of temperature rising to the predicted retention time when the compound of Sample Number 1 is detected, the rate acquired by adding the proper rate correction value calculated by the rate correction value-error relational expression of the compound of Sample Number 1 to the setting temperature rising rate is calculated as the intermediate corrected temperature rising rate. In the second divided section from the detection of the compound of Sample Number 1 to the detection of the compound of Sample Number 2, the rate acquired by adding the proper rate correction value calculated by the rate correction value-error relational expression of the compound of Sample Number 2 to the setting temperature rising rate is calculated as the intermediate corrected temperature rising rate. In the third divided section and the fourth divided section, the actual temperature rising rate calculation part 63 operates in the same manner. Consequently, the intermediate corrected temperature rising rate in the first to fourth divided sections, which are calculated by the actual temperature rising rate calculation part 63, are 5 - 0.45 = 4.55, 5 - 0.20 = 4.80, 5 - 0.13 = 4.87, and 5 - 0.07 = 4.93, respectively.

In the present embodiment, as shown in Fig. 5, in the actual temperature rising rate calculation part 63, when viewing the entire column temperature rising section, the intermediate corrected temperature rising rate varies according to the divided sections, and the temperature rising condition is corrected as a continuous functions at the boundary of the divided sections. That is, a start point of each divided section is calculated by the next previous function, and the next function is determined from the calculated start point and the calculated intermediate corrected temperature rising rate to define a line graph indicating temperature change in the column 13. The straight line indicating the temperature change in the column 13 in each divided section may be defined as a straight line that passes the initial temperature at the temperature rising start time and has the intermediate corrected temperature rising rate, that is, a discontinuous function in each divided section.

Next, the actual temperature rising rate calculation part 63 calculates a final corrected temperature rising rate that is the temperature rising rate acquired by adding a rate recorrection value to the intermediate corrected temperature rising rate as shown in Fig. 5, and calculates the predicted retention time using the rate recorrection value in a predetermined range. That is, the actual temperature rising rate calculation part 63 is configured to calculate the predicted retention time in the state where the temperature rising rate in each divided section is varied in a range represented by a thick dotted line as shown in the graph of Fig. 6. Further, the actual temperature rising rate calculation part 63 calculates the retention time error between the predicted retention time in the case of using the rate recorrection value H and the actually measured retention time, and searches the rate recorrection value at which the retention time error in each compound becomes minimum. Then, the actual temperature rising rate calculation part 63 is configured to estimate the rate acquired by adding the searched rate recorrection value to the intermediate corrected temperature rising rate in each divided section, and outputs the estimated rate as the actual temperature rising rate. In other words, by adding the same rate recorrection value to the intermediate corrected temperature rising rate in each divided section, the actual temperature rising rate calculation part 63 performs fitting of the temperature rising rate in the entire column temperature rising section.

Finally, the post-correction predicted retention time calculation part 7 is configured to calculate the post-correction predicted retention time on the basis of the actual temperature rising rate estimated by the actual temperature condition estimation part 6 and known data by the isothermal analysis, which is stored in the isothermal analysis known data storage part 3, and output the predicted retention time on which the actual temperature rising rate reflects to represent a more correct value, to the qualification part C1.

As described above, the data processing device for gas chromatograph 100 in the present embodiment can estimate the actual temperature rising rate indicating the actual temperature change in the column 13 on the basis of the actually measured retention time and the predicted retention time.

Fig. 7 shows retention time errors in the case where the predicted retention time is calculated using the actual temperature rising rate estimated by the method described in the present embodiment, and retention time errors in the case where the predicted retention time is calculated using the setting temperature rising rate set to the oven 14.

As shown in Fig. 7(a), in the case where the predicted retention time in the temperature rising analysis was calculated using the actual temperature rising rate estimated by the actual temperature condition estimation part 6, the number of errors from the actually measured retention time within $\pm$ 3 seconds was 13 among 20. On the contrary, as shown in Fig. 7(b), in the case where the predicted retention time was calculated using the setting temperature rising rate, the number of errors from the actually measured retention time within $\pm$ 3 seconds was only 6 among 20. This confirms improvement in the accuracy of calculating the predicted retention time. As apparent from comparison between Fig. 7(a) and Fig. 7(b), especially in the lower-boiling compound, the error can be largely decreased by using the estimated actual temperature rising rate.

Then, the post-correction predicted retention time calculated using the actual temperature rising rate estimated by the actual temperature condition estimation part 6 is used by the qualification part C1 to calculate the predicted retention index, thereby further decreasing the error from the actual retention index.

Therefore, by comparing the actually measured retention index actually measured by the gas chromatograph 101 with the predicted retention index calculated from various known data, it is possible to determine a compound corresponding to an unknown sample with high accuracy.

Other embodiments will be described.

In the above-mentioned embodiment, the actual temperature condition estimation part is configured to output the intermediate corrected temperature rising rate recorrected according to the rate recorrection value, as the actual temperature rising rate and however, may be configured to output the intermediate corrected temperature rising rate as shown in Fig. 5 as the actual temperature rising rate without performing recorrection. Further, the actual temperature rising rate may be estimated based on the actually measured retention time and the predicted retention time of a single compound rather than using the actually measured retention time of a plurality of compounds for the divided sections. Furthermore, the actual temperature condition estimation part calculates the temperature rising condition as the continuous function as shown in the graph of Fig. 5 and however, each function that becomes discontinuous at the boundary of the divided sections may be calculated. Further, in the embodiment, only the gradient indicating the temperature rising rate in each divided section is estimated based on the actually measured retention time and the predicted retention time determined according to each rate correction value such that the divided sections are continuous and however, the temperature at a certain time and an intercept of an expression representing temperature change in the temperature rising analysis, in addition to the gradient, may be estimated.

The assumed temperature rising rate is set by adding the rate correction value to the setting temperature rising rate and however, the assumed temperature rising rate may be set by multiplying the setting temperature rising rate by the rate correction value. Even when each parameter is determined with a random number without using the setting temperature rising condition and the correction condition, the assumed temperature condition assumed on the temperature condition in the column can be divided into the setting temperature rising condition and the correction condition. In other words, regardless of how to determine, the assumed temperature condition can be represented as the temperature condition including the setting temperature condition and the correction condition.

The actual temperature condition estimation part is configured to first identify the rate correction value-error relational expression and then, find the proper rate correction value by the identified expression and however, the rate correction values may be randomly assigned without identifying such rate correction value-error relational expression, and the rate correction value at which the calculated predicted retention time matches the actually measured retention time, or the retention time error that is the error between the calculated predicted retention time and the actually measured retention time is less than a predetermined value may be searched in a brute-force manner. In other words, the actual temperature condition estimation part may prepare a plurality of assumed temperature rising rates as candidates for the actual temperature rising rate on the basis of the setting temperature rising rate, compare the predicted retention time calculated at the assumed temperature rising rate with the actually measured retention time, and estimate the most proper assumed temperature rising rate as the actual temperature rising rate. In summary, by using the actually measured retention time and the predicted retention time, the actual temperature rising rate closer to the actual state than the setting temperature rising rate can be found.

The data processing device for gas chromatograph may be further provided with a receiving part for receiving an input from the user. More specifically, when the assumed temperature rising rate including the setting temperature rising rate and the rate correction value is set, the rate correction value may be received such that the user can set any desired rate correction value. The receiving part may be configured to accept user's selection on which of the actual temperature rising rates calculated using a plurality of correction conditions is used to calculate the predicted retention time.

In addition, in the embodiment, the temperature condition estimation part is configured to estimate the actual temperature rising rate in the column in the isothermal analysis and however, the temperature condition estimation part may be configured to estimate the actual temperature in the column with respect to the setting initial temperature set to keep the oven at a constant temperature, as another temperature condition, on the basis of the actually measured retention time and the predicted retention time.

The temperature condition estimation part may be configured to estimate an error between the setting temperature condition to the oven in the temperature rising analysis as well as the isothermal analysis and the actual temperature condition that is the actual temperature condition in the column, or estimate the actual temperature condition itself.

More specifically, in estimating the temperature condition at the time of the isothermal analysis, the setting temperature condition is the setting sustained temperature to the oven, the correction condition is correction temperature, and the assumed temperature condition is an assumed sustained temperature calculated from the setting sustained temperature and the plurality of correction temperatures. Then, the actual temperature condition estimation part may be configured to calculate the predicted retention time at a plurality of assumed sustained temperatures of different correction temperatures, and estimate the assumed sustained temperature that is deviated from the actually measured retention time by a predetermined value or less, as the actual sustained temperature that is the actual temperature condition.

As described above, according to the present invention, the error and relationship between the various setting temperature conditions (setting sustained temperature, setting initial temperature, setting temperature rising rate, and setting temperature rising time) set to the oven in the isothermal analysis or the temperature rising analysis, and the actual temperature conditions in the column (actual sustained temperature, actual initial temperature, actual temperature rising rate, and actual temperature rising time) can be estimated, thereby estimating the actual temperature condition.

In the embodiment, the actual temperature rising rate is estimated to accurately calculate the predicted retention index to be compared with the actually measured retention index and however, the actual temperature rising rate may be estimated to compare the adjustment retention times with each other, or for other purposes. The method of estimating the actual temperature rising rate according to the present invention may be used to recognize the characteristic of the oven and the characteristic of change in the temperature in the column more accurately.

In the case where the existing data processing device for gas chromatograph is provided with a feature for estimating the actual temperature rising rate, for example, the data processing program for gas chromatograph, which is recorded in a recording medium, may be installed into the data processing device

The embodiments may be modified in a various manner and combined with each other so as not to deviate from the subject matter of the present invention.

Industrial Applicability

The present invention can provide the data processing device for gas chromatograph that can indirectly estimate the actual temperature condition such as the actual temperature rising rate without directly measuring the temperature in the column, and actually measuring various values with the gas chromatograph.

**Claims**

1. A data processing device for gas chromatograph comprising:

   an actually measured retention time storage part configured to store an actually measured retention time actually measured on a compound by isothermal analysis or temperature rising analysis in the state where a predetermined setting temperature condition is set to an oven;
   a predicted retention time storage part configured to store a predicted retention time calculated based on known data by the isothermal analysis on the compound and an assumed temperature condition assumed on a temperature condition in a column; and
   an actual temperature condition estimation part configured to estimate an actual temperature condition in the column on the basis of the actually measured retention time and the predicted retention time.

2. The data processing device for gas chromatograph according to claim 1, wherein
   the actually measured retention time storage part stores the actually measured retention time actually measured on the compound by the temperature rising analysis in the state where a predetermined setting temperature rising rate that is the setting temperature condition is set to the oven,
   the predicted retention time storage part stores the predicted retention time calculated based on known data by the isothermal analysis on the compound, and an assumed temperature rising rate that is assumed as the assumed temperature condition and includes the setting temperature rising rate and a rate correction value, and
   the actual temperature condition estimation part estimates an actual temperature rising rate as the actual temperature condition in the column on the basis of the actually measured retention time and the predicted retention time.

3. The data processing device for gas chromatograph according to claim 2, further comprising
   a post-correction predicted retention time calculation part configured to calculate a post-correction predicted retention time on the basis of the actual temperature rising rate estimated by the actual temperature condition estimation part and the known data by the isothermal analysis.

4. The data processing device for gas chromatograph according to claim 2 or claim 3, wherein
   the predicted retention time storage part stores a plurality of predicted retention times calculated based on a plurality of rate correction values of the compound,
   the actual temperature condition estimation part includes:

   a relational expression identification part configured to identify a rate correction value-error relational expression that is a relational expression between the rate correction value and a retention time error on the basis of a plurality of combinations of the rate correction value and the retention time error that is an error between the actually measured retention time and the predicted retention time;

a proper rate correction value calculation part configured to calculate a proper rate correction value that is the rate correction value at the time when the retention time error becomes a predetermined value on the basis of the rate correction value-error relational expression identified by the relational expression identification part; and

an actual temperature rising rate calculation part configured to calculate the actual temperature rising rate on the basis of the proper rate correction value calculated by the proper rate correction value calculation part and the setting temperature rising rate.

5. The data processing device for gas chromatograph according to any one of claims 2 to 4, wherein
   the actually measured retention time storage part stores the actually measured retention time of each of the plurality of compounds,
   the predicted retention time storage part stores the plurality of predicted retention times calculated based on the assumed temperature rising rates of different rate correction values on each of the plurality of compounds,
   the actual temperature condition estimation part divides a column temperature rising section in which at least a column temperature is raised into a plurality of divided sections every predicted retention time calculated using the actually measured retention time or the setting temperature rising rate of each compound, and estimates the actual temperature rising rate in each divided section.

6. The data processing device for gas chromatograph according to claim 5, wherein
   the relational expression identification part is configured to identify the rate correction value-error relational expression of each compound on which the actually measured retention time is actually measured,
   the proper rate correction value calculation part is configured to calculate the proper rate correction value on the basis of the rate correction value-error relational expression of each compound, and
   the actual temperature rising rate calculation part is configured to calculate an intermediate corrected temperature rising rate that is a temperature rising rate acquired by adding a minimum error correction value calculated by the rate correction value-error relational expression of the compound corresponding to the actually measured retention time or the predicted retention time indicating an end of each divided section, to the setting temperature rising rate for each divided section, and calculate the actual temperature rising rate on the basis of the intermediate corrected temperature rising rate.

7. The data processing device for gas chromatograph according to claim 6, wherein
   the actual temperature rising rate calculation part is configured to calculate a final corrected temperature rising rate that is the temperature rising rate acquired by adding a rate recorrection value to the intermediate corrected temperature rising rate calculated for each divided section, and output the final corrected temperature rising rate at which an error between the predicted retention time of each compound, which is calculated using the final corrected temperature rising rate, and the actually measured retention time becomes minimum, as the actual temperature rising rate.

8. A data processing method for gas chromatograph comprising:

   a retention time actually measuring step of actually measuring an actually measured retention time on a compound by isothermal analysis or temperature rising analysis in the state where a predetermined setting temperature condition is set to an oven;

   a retention time predicting step of calculating a predicted retention time on the basis of known data by the isothermal analysis on the compound and an assumed temperature condition assumed on a temperature condition in a column; and

   an actual temperature condition estimating step of estimating an actual temperature condition in the column on the basis of the actually measured retention time and the predicted retention time.

9. A data processing program for gas chromatograph comprising:

   an actually measured retention time storage part configured to store an actually measured retention time actually measured on a compound by isothermal analysis or temperature rising analysis in the state where a predetermined setting temperature condition is set to an oven;

   a predicted retention time storage part configured to store a predicted retention time calculated based on known data by the isothermal analysis and an assumed temperature condition assumed on a temperature condition in a column; and

an actual temperature condition estimation part configured to estimate an actual temperature condition in the column on the basis of the actually measured retention time and the predicted retention time.

200

101

11

100

16

12

15

13

14

FIG.1

RATE
CORRECTION
VALUE

ACTUALLY
MEASURED                    SETTING                    ACTUALLY
RETENTION TIME    TEMPERATURE                MEASURED
RISING RATE                RETENTION
TIME                        100

C2

KNOWN DATA                    QUALIFICATION
CONVERSION PART                    PART                    C1

PREDICTED
RETENTION TIME

QUALIFIED
COMPOUND NAME

(a)

ACTUALLY
MEASURED
RETENTION TIME              RATE            SETTING                    C2
CORRECTION      TEMPERATURE
VALUE          RISING RATE

RETENTION TIME-
TEMPERATURE RELATIONAL
EXPRESSION

ISOTHERMAL-                    ISOTHERMAL
4        TEMPERATURE RISING            ANALYSIS KNOWN            3
CONVERSION PART                DATA STORAGE PART

TEMPERATURE
2                    5        RISING ANALYSIS
RETENTION TIME
A

ACTUALLY MEASURED            PREDICTED RETENTION
RETENTION TIME                TIME STORAGE PART
STORAGE PART

6
ACTUALLY                        CORRECTION VALUE
MEASURED                      PREDICTED RETENTION TIME              63
RETENTION TIME

RATE CORRECTION VALUE-ERROR                            PROPER RATE
RELATIONAL EXPRESSION                              CORRECTION VALUE

RELATIONAL EXPRESSION            MINIMUM ERROR RATE            ACTUAL TEMPERATURE
61          IDENTIFICATION PART            CORRECTION VALUE            RISING RATE
CALCULATION PART            CALCULATION PART

ACTUAL TEMPERATURE CONDITION
ESTIMATION PART

ACTUAL TEMPERATURE
RISING RATE

62
POST-CORRECTION
A                    PREDICTED RETENTION
TIME CALCULATION PART              7
RETENTION TIME-TEMPERATURE
RELATIONAL EXPRESSION

POST-CORRECTION PREDICTED
RETENTION TIME

(b)

# FIG.2

18

Example of actually measured retention time stored in actually measured retention time storage part

| | Setting temperature rising rate set to oven | | | | |
|---|---|---|---|---|---|
| | 5°C/min | 8°C/min | 10°C/min | 15°C/min | 20°C/min |
| Sample Number | Actually measured retention time(min) | | | | |
| 1 | 10.74 | 8.881 | 8.109 | 6.923 | 6.227 |
| 2 | 13.294 | 10.569 | 9.487 | 7.878 | 6.965 |
| 3 | 14.209 | 11.155 | 9.968 | 8.206 | 7.214 |
| 4 | 16.154 | 12.487 | 11.075 | 9.001 | 7.844 |

(a)

Example of predicted retention time stored in predicted retention time storage part
In this example, prediction is performed using setting temperature rising rate
set to oven without using correction value

| | Assumed temperature rising rate = setting temperature rising rate | | | | |
|---|---|---|---|---|---|
| | 5°C/min | 8°C/min | 10°C/min | 15°C/min | 20°C/min |
| Sample Number | Predicted retention time (min) | | | | |
| 1 | 10.36 | 8.86 | 7.95 | 6.83 | 6.16 |
| 2 | 13.04 | 10.43 | 9.39 | 7.82 | 6.92 |
| 3 | 14.04 | 11.08 | 9.92 | 8.18 | 7.20 |
| 4 | 16.03 | 12.42 | 11.04 | 8.98 | 7.82 |

(b)

Example of predicted retention time stored in predicted retention time storage part
Predicted retention time is calculated using assumed temperature rising rate acquired
by adding rate correction value to setting temperature rising rate of 5°C/min.

| | Rate correction value | | | | | | | |
|---|---|---|---|---|---|---|---|---|
| | -1 | 0 | 0.1 | 0.2 | 0.3 | 0.4 | 0.5 | 1 |
| Sample Number | Predicted retention time (min) | | | | | | | |
| 1 | 11.25 | 10.36 | 10.28 | 10.21 | 10.14 | 10.06 | 10.00 | 9.67 |
| 2 | 14.49 | 13.04 | 12.91 | 12.80 | 12.68 | 12.57 | 12.46 | 11.95 |
| 3 | 15.72 | 14.04 | 13.90 | 13.76 | 13.63 | 13.50 | 13.38 | 12.80 |
| 4 | 18.12 | 16.03 | 15.86 | 15.69 | 15.53 | 15.37 | 15.22 | 14.51 |

(c)

Error between actually measured retention time and predicted retention time
calculated at setting temperature rising rate

| | 5°C/min | 8°C/min | 10°C/min | 15°C/min | 20°C/min |
|---|---|---|---|---|---|
| Sample Number | Error (sec) between actually measured retention time and predicted retention time | | | | |
| 1 | -22.80 | -13.26 | -9.54 | -5.58 | -4.02 |
| 2 | -15.24 | -8.34 | -5.82 | -3.48 | -2.70 |
| 3 | -10.14 | -4.50 | -2.88 | -1.58 | -0.84 |
| 4 | -7.44 | -4.02 | -2.10 | -1.26 | -1.44 |

(d)

FIG.3

Retention time error in the case where predicted retention time is calculated
using assumed temperature rising rate acquired by adding rate correction value
to setting temperature rising rate of 5 °C/min

| | Rate correction value | | | | | | | |
|---|---|---|---|---|---|---|---|---|
| | -1 | 0 | 0.1 | 0.2 | 0.3 | 0.4 | 0.5 | 1 |
| Sample Number | Error (sec) between actually measured retention time and predicted retention time | | | | | | | |
| 1 | 30.60 | -22.80 | -27.60 | -31.80 | -36.00 | -40.80 | -44.40 | -64.20 |
| 2 | 71.76 | -15.24 | -23.04 | -29.64 | -36.84 | -43.44 | -50.04 | -80.64 |
| 3 | 90.66 | -10.14 | -18.54 | -26.94 | -34.74 | -42.54 | -49.74 | -84.54 |
| 4 | 117.96 | -7.44 | -17.64 | -27.84 | -37.44 | -47.04 | -56.04 | -98.64 |

(a)

RETENTION TIME
ERROR sec

————— 2-Octanone
————— 1-Octanol
—————·— 2,6-Dimethylphenol
- - - - - - - 2,6-Dimethylanilline

RATE CORRECTION
VALUE °C/min

(b)

# FIG.4

FIG.5

————··——— SETTING TEMPERATURE RISING CONDITION

——————— INTERMEDIATE CORRECTED TEMPERATURE RISING CONDITION

—————————— CANDIDATE RANGE FOR FINAL CORRECTED TEMPERATURE RISING CONDITION

$T_{Ri}$   PREDICTED RETENTION TIME AT SETTING TEMPERATURE RISING RATE ON COMPOUND i

FIG.6

Retention time error between actually measured retention time and predicted
retention time calculated at actual temperature rising rate

| | 5°C/min | 8°C/min | 10°C/min | 15°C/min | 20°C/min |
|---|---|---|---|---|---|
| Sample Number | Error (sec) between actually measured retention time and predicted retention time | | | | |
| 1 | -15.60 | -8.46 | -5.34 | -2.58 | -1.02 |
| 2 | -5.64 | -2.34 | -1.02 | 0.72 | 0.90 |
| 3 | 0.06 | 1.50 | 1.92 | 2.64 | 2.76 |
| 4 | 2.16 | 2.58 | 2.70 | 2.94 | 2.16 |

(a)

Retention time error between actually measured retention time and predicted
retention time calculated at setting temperature rising rate

| | 5°C/min | 8°C/min | 10°C/min | 15°C/min | 20°C/min |
|---|---|---|---|---|---|
| Sample Number | Error (sec) between actually measured retention time and predicted retention time | | | | |
| 1 | -22.80 | -13.26 | -9.54 | -5.58 | -4.02 |
| 2 | -15.24 | -8.34 | -5.82 | -3.48 | -2.70 |
| 3 | -10.14 | -4.50 | -2.88 | -1.58 | -0.84 |
| 4 | -7.44 | -4.02 | -2.10 | -1.26 | -1.44 |

(b)

# FIG.7

FIG.8

―――――――――・・――SETTING TEMPERATURE CONDITION
―――――――――ACTUAL TEMPERATURE

COLUMN TEMPERATURE
CHANGING SECTION

COLUMN TEMPERATURE

TEMPERATURE RISING
START TIME

TEMPERATURE RISING
END TIME

TIME

example 1

―――――――――・・――SETTING TEMPERATURE CONDITION
―――――――――ACTUAL TEMPERATURE

COLUMN TEMPERATURE
CHANGING SECTION

COLUMN TEMPERATURE

TEMPERATURE RISING
START TIME

TEMPERATURE RISING
END TIME

TIME

example 2

FIG.9

Europäisches
Patentamt

European
Patent Office

Office européen
des brevets

**EUROPEAN SEARCH REPORT**

Application Number

EP 14 00 1358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2012/118209 A1 (HORIBA STEC CO LTD [JP]; SASAKI TOMOHIRO [JP]; WADA NAOKI [JP]) 7 September 2012 (2012-09-07) | 1-5,8,9 | INV. G01N30/86 |
| A | * claims 1,2; figure 2 * | 6,7 | ADD. G01N30/30 |
| Y | EP 0 872 732 A1 (PERKIN ELMER CORP [US] PERKINELMER HEALTH SCI INC [US]) 21 October 1998 (1998-10-21) | 1-5,8,9 | |
| A | * page 6, lines 34-36; claim 1; figures 1,2 * <br> * claim 2 * | 6,7 | |
| A | US 5 827 946 A (KLEE MATTHEW S [US] ET AL) 27 October 1998 (1998-10-27) * claim 1; figure 1 * | 1,8,9 | |
| A | PAUL G. BOSWELL ET AL: "Easy and accurate calculation of programmed temperature gas chromatographic retention times by back-calculation of temperature and hold-up time profiles", JOURNAL OF CHROMATOGRAPHY A, vol. 1263, 1 November 2012 (2012-11-01), pages 179-188, XP055087514, ISSN: 0021-9673, DOI: 10.1016/j.chroma.2012.09.048 * page 180, left-hand column * | 1,8,9 | TECHNICAL FIELDS SEARCHED (IPC) <br><br> G01N |

The present search report has been drawn up for all claims

| Place of search | Date of completion of the search | Examiner |
|---|---|---|
| Munich | 10 July 2014 | Marembert, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 00 1358

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2014

| Patent document cited in search report | | Publication date | Patent family member(s) | | Publication date |
|---|---|---|---|---|---|
| WO 2012118209 | A1 | 07-09-2012 | CN | 103403542 A | 20-11-2013 |
| | | | EP | 2682744 A1 | 08-01-2014 |
| | | | US | 2014188403 A1 | 03-07-2014 |
| | | | WO | 2012118209 A1 | 07-09-2012 |
| EP 0872732 | A1 | 21-10-1998 | EP | 0872732 A1 | 21-10-1998 |
| | | | JP | 4343284 B2 | 14-10-2009 |
| | | | JP | H10325835 A | 08-12-1998 |
| | | | US | 5915269 A | 22-06-1999 |
| US 5827946 | A | 27-10-1998 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012118209 A